# EUROPÄISCHE PATENTANMELDUNG

(11) **EP 3 031 752 A1**
(43) Veröffentlichungstag der Anmeldung: **15.06.2016**
(21) Anmeldenummer: 15198160.2
(22) Anmeldetag: 07.12.2015
(51) Int. Cl.: B65G 17/08, C08K 3/04, C08G 73/00, A24C 5/35

(54) **TRAGFÖRDERKETTENGLIED, TRAGFÖRDERKETTE SOWIE TRANSFER- UND/ODER SPEICHERSYSTEM FÜR STABFÖRMIGE ARTIKEL DER TABAK VERARBEITENDEN INDUSTRIE**

(30) Priorität: 09.12.2014 DE 102014118244
(71) Anmelder: HAUNI Maschinenbau AG, 21033 Hamburg (DE)
(72) Erfinder: Krößmann, Jürgen, 21493 Schwarzenbek (DE); Wuttke, Tobias, 21031 Hamburg (DE); Becker, Carsten, 21465 Wentorf (DE)
(74) Vertreter: Stork Bamberger

(57) **Zusammenfassung**

Ein Tragförderkettenglied (13), das für eine Tragförderkette (12) einer Maschine der Tabak verarbeitenden Industrie ausgebildet und eingerichtet ist, wobei die Tragförderkette (12) mindestens zwei Schwenkbewegungen ausführen kann, von denen eine erste Schwenkbewegung die Bewegung der Tragförderkette (12) senkrecht zur Transportebene erlaubt und eine zweite Schwenkbewegung eine Bewegung die Kurvengängigkeit gewährleistet, wobei das Tragförderkettenglied (13) aus einem Kunststoffmaterial besteht, ist vollständig aus elektrisch leitfähigem Kunststoffmaterial gebildet. Dadurch wird einer elektrostatischen Aufladung entgegengewirkt. Eventuell entstehende elektrostatische Aufladung kann, sobald die Tragförderkette (12) mit einem elektrisch geerdeten Teil in Berührung kommt, abgeführt werden.

## Beschreibung

Die Erfindung betrifft ein Tragförderkettenglied, ausgebildet und eingerichtet für eine Tragförderkette einer Maschine der Tabak verarbeitenden Industrie, wobei die Tragförderkette mindestens zwei Schwenkbewegungen ausführen kann, von denen eine erste Schwenkbewegung die Bewegung der Tragförderkette senkrecht zur Transportebene erlaubt und eine zweite Schwenkbewegung eine Bewegung die Kurvengängigkeit gewährleistet, wobei das Tragförderkettenglied aus einem Kunststoffmaterial besteht.

Die Erfindung betrifft ferner Tragförderkette für eine Maschine der Tabak verarbeitenden Industrie, wobei die Kette axial und radial kurvengängig ist.

Des Weiteren betrifft die Erfindung eine Anordnung für den Transport von stabförmigen Artikeln der Tabak verarbeitenden Industrie aus einer Tragförderkette und mindestens zwei Umlenkrollen, von denen mindestens eine als Antriebsrad ausgebildet ist.

Schließlich betrifft die Erfindung ein Transfer- und/oder Speichersystem für stabförmige Artikel der Tabak verarbeitenden Industrie, umfassend einen Kettenförderer für stabförmige Artikel, umfassend eine endlos umlaufende Tragförderkette sowie mehrere Umlenkrollen und mindestens ein Antriebsrad, um die die Kette geführt ist.

Tragförderketten kommen im Bereich der Tabak verarbeitenden Industrie zum Einsatz, um stabförmige Artikel, beispielsweise Zigaretten oder Filterstäbe, vereinzelt oder vorzugsweise queraxial, mehrlagig in einem Massenstrom zu transportieren und/oder zu speichern.

Solche Förderketten sind beispielsweise Bestandteil eines Speichers, der nach dem Prinzip "First in- First out" (FiFo-Speicher) arbeitet. Ein entsprechender Speicher ist z.B. aus der EP 1 445 218 B1 bekannt. Des Weiteren kommen solche Förderketten auch in reinen Transporteinrichtungen ohne Speicherfunktion zum Einsatz, insbesondere zwischen den einzelnen Stationen einer Anlage der Tabak verarbeitenden Industrie. Die Förderketten sind mittels einer Spannvorrichtung mit einer Spannkraft F gespannt, um einen sicheren Transport der Artikel zu gewährleisten und ein Durchhängen beispielsweise aufgrund hoher Belastung durch die Artikel kompensieren zu können. Die einzelnen Kettenglieder sind gelenkig zumeist über Bolzen miteinander verbunden. Die Förderkette selbst ist endlos ausgebildet und schleifenartig um Umlenkrollen und/oder Antriebsräder geführt. Dabei kann die Förderkette in einer Ebene oder in mehreren übereinander angeordneten Ebenen geführt sein. In einem FiFo-Speicher beispielsweise laufen Förderketten über mehrere Ebenen um. So können die Förderketten große Längen von mehr als 100 m aufweisen.

Die Tragförderketten sind aufgrund der hohen Anzahl von Artikeln, die üblicherweise mehrlagig auf den Tragförderketten liegen, hoch beansprucht. Das bedeutet, dass große Kräfte auf die Tragförderkette wirken, sowohl in Transportrichtung als auch senkrecht zur Transportrichtung. Die Belastung auf die Tragförderkette wird noch dadurch erhöht, dass solche Tragförderketten, beispielsweise in dem FiFo-Speicher, über mehrere Ebenen umlaufen. Wie oben beschrieben können die Tragförderketten große Längen von mehr als 100m aufweisen, wodurch das Eigengewicht solcher Tragförderketten als zusätzliche Belastung sehr hoch ist. Neben der großen Länge, die eine sehr hohe Spannkraft der Tragförderkette erfordert, erhöht sich dadurch auch die mögliche Belastung der Tragförderkette bei voller Beladung derselben. Damit sind die Ansprüche an die einzelnen Kettenglieder hoch. Jedes Kettenglied und jede Verbindung der einzelnen Glieder miteinander muss der Belastung standhalten, damit die Tragförderkette nicht reißt.

Tragförderketten in der Tabak verarbeitenden Industrie bestehen daher üblicherweise aus Kunststoffen wie Polybutylenterephthalat (PBT), Polyoxymethylen (POM, auch Polyacetal), Polyethylenterephthalat (PET), Polyethylen (PE) oder Polyurethanen (PUR), deren Copolymeren oder verwandten Verbindungen.

Bei der Verwendung unterliegen die Tragförderketten vielen Reibprozessen. So reiben die einzelnen Kettenelemente gegeneinander, Reibung entsteht ferner, wenn die Kette mit den Umlenkrollen in Berührung kommt. Auch bei Aufbringen der stabförmigen Artikel auf die Tragförderkette kommt es zu Reibung. Da die Tragförderketten und auch die Umlenkrollen aus Kunststoffmaterial hergestellt sind und es sich bei Kunststoff um ein dielektrisches Material handelt, entstehen durch die Reibung permanent elektrostatische Aufladungen. Diese elektrostatischen Aufladungen führen dazu, dass Staub, Bakterien und dafür anfällige Transportgüter wie zum Beispiel Filterstäbe an der Tragförderkette anhaften, was im weiteren Transportprozess zu Störungen führen kann. Auch kann die elektrostatische Aufladung dazu führen, dass sich die zu transportierenden Artikel nur schwer oder nicht von der Tragförderkette lösen, wenn sie diese verlassen sollen. Je trockener die Umgebungsluft ist, umso größer ist die entstehende elektrostatische Aufladung.

Der Erfindung lag daher die Aufgabe zugrunde, bei einer Tragförderkette der Tabak verarbeitenden Industrie die elektrostatische Aufladung so weit zu verringern, dass Störungen durch Staub oder andere Partikel reduziert werden und ein Anhaften der Transportgüter im Wesentlichen vermieden wird.

Die Aufgabe wird durch ein Tragförderkettenglied der eingangs genannten Art dadurch gelöst, dass das Tragförderkettenglied vollständig aus mindestens einem elektrisch leitfähigen Kunststoffmaterial gebildet ist. Auf diese Weise wird der Bildung von elektrostatischer Aufladung bereits entgegengewirkt. Eventuell doch entstehende elektrostatische Aufladung wird, sobald die Tragförderkette mit einem elektrisch geerdeten Teil, beispielsweise mit Tragschienen oder Tragblechen, in Berührung kommt, abgeführt. Durch die vollständige Ausbildung der Kettenglieder aus einheitlichem Material werden etwaige Instabilitäten, die durch Materialübergänge zwangsläufig entstehen, vermieden. Ein elektrisch leitfähiger Kunststoff im Sinne der Erfindung ist dabei ein Kunststoff, der eine elektrische Leitfähigkeit von mindestens 10⁻¹⁰ S cm⁻¹ aufweist.

Dadurch, dass das gesamte Kettenglied aus elektrisch leitfähigem Material besteht, wird ferner sichergestellt, dass jegliche entstehende elektrostatische Aufladung abgeleitet werden kann. Die mit der Tragförderkette zu transportierenden Artikel liegen großflächig auf den Kettengliedern auf. Eine nur partielle elektrische Leitfähigkeit, d.h. eine Leitfähigkeit nur eines Teils des Kettengliedes wäre daher nicht ausreichend, ebenso wenig wie die Variante, metallische Stifte oder andere metallische Komponenten in oder zwischen die Kettenglieder einzusetzen.

Besonders bevorzugt ist das Tragförderkettenglied einstückig ausgebildet und im Spritzgussverfahren hergestellt. Die einstückige Ausbildung sorgt ebenfalls dafür, dass im Kettenglied selbst keine unerwünschten Sollbruchstellen vorhanden sind, und wirkt somit stabilitätserhöhend. Das Spritzgussverfahren ist eine besonders einfache und kostengünstige Art der Herstellung der Tragförderkettenglieder und ermöglicht eine beliebige Formgebung des Kettengliedes ohne geometrische Restriktionen.

Vorzugsweise ist das elektrisch leitfähige Kunststoffmaterial mindestens ein Material ausgewählt aus der Gruppe, bestehend aus mindestens ein intrinsisch leitfähiges Polymer enthaltenden Polymeren und mindestens ein elektrisch leitfähiges Additiv enthaltenden Polymeren. Die elektrisch leitfähigen Additive können besonders geeignet anorganische Additive sein, insbesondere ausgewählt aus mindestens einer Substanz der Gruppe bestehend aus Kohlenstofffasern, Edelstahlfasern, Kupfer, Aluminium, Leitfähigkeitsruß und Graphit, wobei Kohlenstofffasern besonders bevorzugt sind. Für den Fall, dass als elektrisch leitfähiges Additiv Kohlenstofffasern verwendet werden, ist ein Anteil von 10 bis 40 Vol.-%, insbesondere 20 bis 30 Vol.-% besonders bevorzugt. Im Falle von Aluminiumspänen ist ein Anteil im Kunststoff von 10 bis 20 Vol.-%, insbesondere von 13 bis 18 Vol.-% besonders bevorzugt und im Falle von Edelstahlfasern ist ein Anteil von 0,1 bis 5 Vol.-%, insbesondere von 0,4 bis 2 Vol.-% besonders bevorzugt.

Intrinsisch leitfähige Polymere sind Kunststoffe mit einer Leitfähigkeit, die derjenigen von Metallen vergleichbar ist. Abgesehen von der gegenüber herkömmlichen Kunststoffen stark erhöhten Leitfähigkeit weisen die intrinsisch leitfähigen Polymere im Übrigen ihre bekannten Kunststoffeigenschaften wie z.B. in Bezug auf Plastizität, Bruchfestigkeit, Formbeständigkeit, Schlagzähigkeit, Gleit- und Verschleißverhalten auf. Da keine zusätzlichen Elemente wie Metallfasern eingebracht werden müssen, besteht auch nicht die Gefahr, dass solche Zusätze aus dem Kettenglied abgeschieden werden und in die zu transportierenden Artikel gelangen könnten. Der Anteil an intrinsisch leitfähigem Polymer beträgt vorzugsweise von 2 bis 40, insbesondere von 5 bis 30, besonders bevorzugt von 7 bis 25 und ganz besonders bevorzugt von 10 bis 17 und insbesondere 12 bis 16 Gew.-%.

Vorzugsweise ist das Kunststoffmaterial aus einer Mischung von intrinsisch leitfähigem Polymer und nicht leitfähigem Polymer hergestellt.

Besonders bevorzugt besteht das Kunststoffmaterial aus einer Mischung von mindestens ein intrinsisch leitfähiges Polymer enthaltendem Polymer und mindestens ein elektrisch leitfähiges Additiv enthaltendem Polymer. Es ist jedoch auch denkbar, einem mindestens ein intrinsisch leitfähiges Polymer enthaltendem Polymer elektrisch leitfähige Additive zuzusetzen.

Vorzugsweise gehören die Polymere, d.h. die intrinsisch leitfähiges Polymer enthaltenden Polymere und die elektrisch leitfähiges Additiv enthaltenden Polymere, zur selben Familie gehören. Als dieselbe Familie sind dabei z.B. verschiedene Terephthalate oder verschiedene Polyurethane jeweils untereinander gemeint.

In einer weiteren bevorzugten Ausgestaltung enthält das elektrisch leitfähige Kunststoffmaterial ein elektrisch leitfähiges Additiv oder zwei elektrisch leitfähige Additive. Als besonders geeignet haben sich elektrisch leitfähige Kunststoffe herausgestellt, die aus einem ein intrinsisch leitfähiges Polymer enthaltenden Polymer einem weiteren Polymer bestehen, das entweder ein elektrisch leitfähiges Additiv oder zwei elektrisch leitfähige Additive enthält. Besonders gute Ergebnisse lassen sich erzielen, wenn als das weitere Polymer Kohlenstofffasern oder Edelstahlfasern oder eine Mischung aus Kohlenstoff- und Edelstahlfasern enthält.

Vorzugsweise beträgt dabei der Gewichtsanteil der Edelstahlfasern oder der Kohlenstofffasern von 1 bis 6 Gew.-%, vorzugsweise von 2 bis 4 Gew.-%, wobei der Gesamtgehalt an anorganischem Additiv von 1 bis 9 Gew.-%, vorzugsweise von 2 bis 8 Gew.-%, beträgt und wobei der Gewichtsanteil jeweils auf das gesamte elektrisch leitfähige Kunststoffmaterial bezogen ist, d.h. auf die Gesamtmaterialmenge des Tragförderkettengliedes.

Sowohl als Edelstahlfasern wie auch als Kohlenstofffasern sind solche besonders geeignet, die eine Länge von 0,02 bis 20 mm, vorzugsweise von 0,02 bis 2 mm, insbesondere von 0,02 bis 0,2 mm aufweisen..

Wenn als elektrisch leitfähiges Additiv Leitfähigkeitsruß zum Einsatz kommt, ist dieser vorzugsweise in einem Gewichtsanteil von weniger als 3 Gew.-%, insbesondere weniger als 2 Gew.-% enthalten. Überraschenderweise hat sich gezeigt, dass, obwohl Ruß üblicherweise die Zugfestigkeit des Kunststoffmateriales stark verringert, mit dem erfindungsgemäßen Kunststoffmaterial Tragförderkettenglieder hergestellt werden können, die den besonderen Anforderungen, die angesichts der eingangs geschilderten Belastungen an Kettenglieder von Tragförderketten von Maschinen der Tabak verarbeitenden Industrie gestellt werden, gewachsen sind, und gleichzeitig für eine gegenüber den Kettenfördergliedern des Standes der Technik relevant verringerte Anhaftungszeit und -intensität der transportierten stabförmigen Artikel aufweisen.

Vorteilhafterweise ist das Kunststoffmaterial des Tragförderkettengliedes pyrolysekonform. Pyrolysekonform ist ein Material, das beim Verbrennen bei Temperaturen etwa im Bereich von 400°C bis 1000°C keine Schadstoffe freisetzt. Als pyrolysekonform werden insbesondere solche Kunststoffe verstanden, die keine Halogene wie Chlor oder Fluor enthalten.

Bevorzugte Kunststoffmaterialien für die Tragförderkettenglieder sind dabei Polybutylenterephthalat (PBT), Polyoxymethylen (POM, auch Polyacetal), Polyethylenterephthalat (PET), oder Polystyrol (PS), deren Copolymeren oder verwandten Verbindungen, jeweils in einer Mischung aus einer intrinsisch leitfähigen und einer nicht intrinsisch leitfähigen Komponente.

Ganz besonders bevorzugt besteht das Tragförderkettenglied dabei aus einer Mischung aus Polyoxymethylen als intrinsisch leitfähigem Polymer und Polybutylenterephthalat, wobei der Anteil an intrinsisch leitfähigem Polymer vorzugsweise von 5 bis 30, besonders bevorzugt von 7 bis 25 und ganz besonders bevorzugt von 10 bis 17 Gew.-% beträgt.

Die vorliegende Erfindung betrifft darüber hinaus eine Tragförderkette für eine Maschine der Tabak verarbeitenden Industrie, wobei die Kette axial und radial kurvengängig ist, die aus erfindungsgemäßen Tragförderkettengliedern besteht. Eine solche Tragförderkette ist für den Einsatz in der Tabak verarbeitenden Industrie besonders geeignet. Dadurch, dass die Kettenglieder vollständig aus elektrisch leitfähigem Kunststoffmaterial gebildet sind, ist die elektrische Leitfähigkeit in das Grundmaterial eingebracht. Sie ist homogen verteilt und an allen Flächen messbar. Die Ableitung der Ladung kann an jeder Stelle erfolgen, die die Kette passiert, so zum Beispiel durch leitfähige Führungen/Gleitschienen. Besonders bevorzugt erfolgt die Ableitung über eine Umlenkrolle oder ein Antriebsrad, indem diese ebenfalls aus elektrisch leitfähigem Kunststoffmaterial gebildet sind.

Daher betrifft die vorliegende Erfindung des Weiteren eine Anordnung für den Transport von stabförmigen Artikeln der Tabak verarbeitenden Industrie aus einer Tragförderkette und mindestens zwei Umlenkrollen, von denen mindestens eine als Antriebsrad ausgebildet ist, wobei die Tragförderkette eine erfindungsgemäße Tragförderkette ist und die Umlenkrollen vollständig aus einem elektrisch leitfähigen Kunststoffmaterial gebildet sind.

Tragförderkette und Umlenkrollen können aus dem gleichen Material bestehen. Ebenso ist es möglich, dass Tragförderkette und Umlenkrollen aus unterschiedlichen elektrisch leitfähigen Kunststoffmaterialien bestehen. Vorzugsweise können die Materialien eine unterschiedliche Härte aufweisen, wobei die Umlenkrollen vorzugsweise aus weicherem Material bestehen als die Tragförderkette, da die Umlenkrollen einfacher ausgetauscht werden können als die Tragförderkette.

Die erfindungsgemäßen Tragförderketten sind kurvengängig. Sie können aus einer Art Kettenglied bestehen. Ebenso ist es jedoch möglich, dass die Kette aus zwei oder mehreren verschiedenen Arten von Kettengliedern wie z.B. aus Traggliedern und Verbindungsgliedern aufgebaut ist. In diesem Fall sind sämtliche Arten von Kettengliedern erfindungsgemäß ausgebildet, d.h. vollständig aus einem elektrisch leitfähigen Kunststoffmaterial gebildet.

Die Tragförderkettenglieder, im Falle der Bildung aus mehreren verschiedenen Kettenglieder die Tragglieder, sind zur Aufnahme von zu transportierenden Artikeln entsprechend ausgebildet, beispielsweise durch eine ebene Oberfläche. Die Tragförderketten bzw. deren - ggf. über Zwischenglieder verbundenen - Tragförderkettenglieder sind derart ausgebildet, dass sie mindestens zwei Schwenkbewegungen ausführen können. Eine erste Schwenkbewegung erlaubt die Bewegung der Förderkette senkrecht zur Transport- bzw. Antriebsebene, wodurch die Förderkette in der Lage ist, insbesondere Steigungen zu überwinden und eine Rückführung bzw. einen Rücklauf der Förderkette (ohne Artikel) zu gewährleisten.

Eine zweite Schwenkbewegung ist erforderlich, um die Kurvengängigkeit der Förderkette in der Transport- bzw. Antriebsebene zu gewährleisten. Anders ausgedrückt ermöglicht die Tragförderkette bei horizontal ausgerichteten Tragförderkettengliedern innerhalb der Transportebene im Verlauf der Transportstrecke (in der die Tragförderkette mit Artikeln versehen sein kann) Kurven.

Bei den erfindungsgemäßen Tragförderketten ist es in einer bevorzugten Ausführungsform möglich, dass die Betriebslast für die Zugfestigkeit der Tragförderkette 1.500 N, insbesondere 1.800 N und besonders bevorzugt 2.000 N beträgt. Wie oben ausgeführt, sind die Tragförderketten in Anlagen der Tabak verarbeitenden Industrie besonderen Belastungen ausgesetzt. Dies gilt insbesondere, wenn es sich um sehr lange Tragförderketten handelt, wie sie beispielsweise in FiFo-Speichern zum Einsatz kommen.

Im Falle kürzerer Tragförderketten, zum Beispiel für den Einsatz zum Transport zwischen einzelnen Maschinen oder Stationen einer Anlage, die oftmals nur zwischen 1 und 10 m lang sind, ist es ausreichend, wenn die Betriebslast für die Zugfestigkeit der Tragförderkette bis zu 300 N beträgt und die Bruchlast bei bis zu 800 N liegt.

Die Teilung der erfindungsgemäßen Tragförderketten beträgt vorteilhafterweise 2,54 cm (1 Zoll). Vorteilhafterweise beträgt die Breite der Tragförderkette von 150 bis 230 mm für die Anwendung für Filterstäbe. Sie kann bei der Anwendung für Filterzigaretten jedoch auch von 36 bis 98 mm betragen.

Vorzugsweise beträgt der horizontale Kurvenradius der Tragförderkette mindestens 500 mm, besonders bevorzugt mindestens 600 mm, insbesondere mindestens 750 mm. Unter "horizontalem Kurvenradius" wird dabei der Radius einer Kurve in der Förderketten- bzw. Transportebene verstanden.

Außerdem beträgt der kleinste vertikale Umlenkradius der Tragförderkette vorzugsweise höchstens 55 mm, bevorzugt höchstens 50 mm, insbesondere höchstens 45 mm Der vertikale Umlenkradius ist der Radius der vertikalen Umlenkrolle, d.h. derjenigen Rolle, die eine horizontale Achse aufweist, wobei die Achse parallel zur Tragförderkette und senkrecht zur Transportrichtung liegt.

Schließlich betrifft die vorliegende Erfindung ein Transfer- und/oder Speichersystem für stabförmige Artikel der Tabak verarbeitenden Industrie, umfassend einen Kettenförderer für stabförmige Artikel, umfassend eine endlos umlaufende Tragförderkette sowie mindestens zwei Umlenkrollen, von denen mindestens eine als Antriebsrad ausbildet ist und um die die Kette geführt ist, wobei die Kette eine erfindungsgemäße Tragförderkette ist. Bei einem solchen erfindungsgemäßen Transfer- und/oder Speichersystem kann die Staubanlagerung und der damit verbundene Verschleiß reduziert werden.

Außerdem wird bewirkt, dass zu transportierende Artikel nicht unkontrolliert im Transportprozess fallen. Ein unkontrolliertes Fallen wäre gegeben, die Artikel z.B. die Tragförderkette verlassen sollen, jedoch aufgrund von elektrostatischer Aufladung an der Kette haften bleiben und damit nicht zu einem definierten sondern zu einem nicht kontrollierbaren Zeitpunkt die Ketten verlassen. Aus dem gleichen Grund wird auch ein ungewolltes Vermischen von Artikeln vermieden. Die Vorteile, die in Bezug auf das Tragförderkettenglied oder die Tragförderkette beschrieben wurden, gelten in entsprechender Weise auch für das erfindungsgemäße Transfer- und/oder Speichersystem.

Weitere zweckmäßige und/oder vorteilhafte Merkmale und Ausgestaltungen ergeben sich aus den Unteransprüchen und der Beschreibung. Eine besonders bevorzugte Ausführungsform sowie das Verfahrensprinzip werden anhand der beigefügten Zeichnung näher erläutert. In der Zeichnung zeigt:
- Fig. 1: eine perspektivische Darstellung eines Transfersystems für stabförmige Artikel der Tabak verarbeitenden Industrie,
- Fig. 2: eine perspektivische Darstellung einer Speichereinrichtung der Tabak verarbeitenden Industrie,
- Fig. 3: einen Ausschnitt der Speichereinrichtung gemäß Figur 2, nämlich den Bereich des Antriebsrades der Förderkette in einer ersten Ausführungsform,
- Fig. 4: eine perspektivische Ansicht einer Ausführungsform eines Tragförderkettengliedes,
- Fig. 5: eine perspektivische Ansicht einer Transporteinheit mit einem Tragförderkettenabschnitt auf einem Umlenk- und Antriebsrad von schräg oben, und
- Fig. 6: eine Seitenansicht der Transporteinheit der Fig. 5 im Teilschnitt.

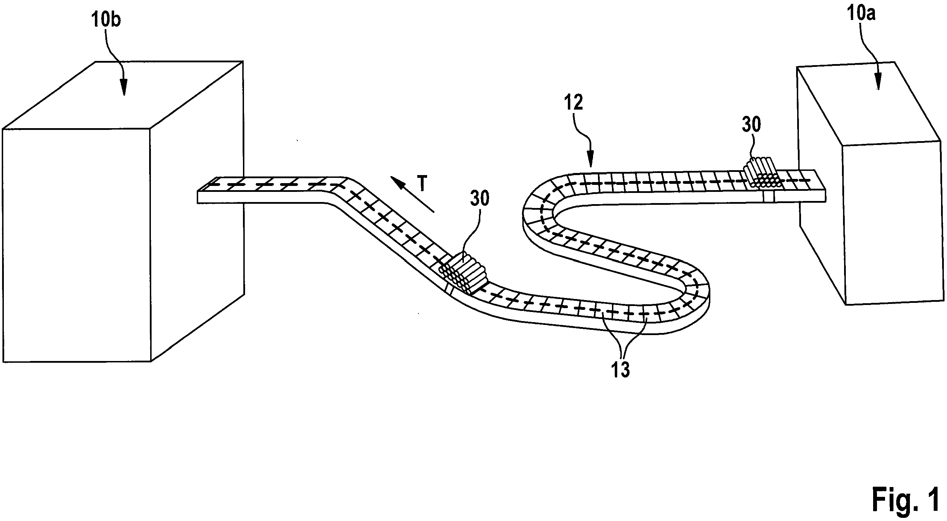

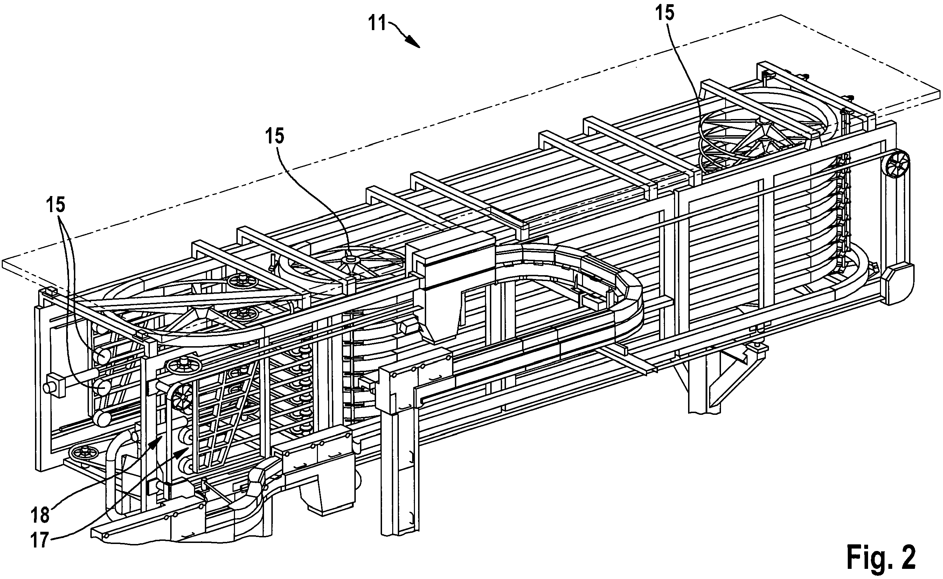

Die in der Zeichnung dargestellten Ausführungsformen dienen dem Transportieren bzw. dem Speichern von stabförmigen Artikeln der Tabak verarbeitenden Industrie. So zeigt die Figur 1 eine bevorzugte Anwendung der erfindungsgemäßen Tragförderkette, nämlich zum Transport von Artikeln der Tabak verarbeitenden Industrie zwischen zwei Verarbeitungsmaschinen der Tabak verarbeitenden Industrie. Anhand der Figur 2 wird eine weitere bevorzugte Anwendung der erfindungsgemäßen Tragförderkette 12 beschrieben, nämlich ein so genannter FiFo-Speicher 11, wobei sich die Erfindung nicht auf die Anwendung in einem FiFo-Speicher beschränkt.

Es wird darauf hingewiesen, dass die im Folgenden beschriebenen Merkmale und Merkmalskombinationen auch für sich betrachtet oder in anderen als den gezeigten Kombinationen realisiert sein können.

In der Figur 1 ist schematisch ein erfindungsgemäßes Transfersystem dargestellt. Dabei zeigt Figur 1 einen Abschnitt einer Tragförderkette 12, die stabförmige Artikel 30 wie Zigaretten oder Filter von einer ersten Verarbeitungsmaschine 10a zu einer zweiten Verarbeitungsmaschine 10b der Tabak verarbeitenden Industrie transportiert. Für die Darstellung ist lediglich ein kleiner Ausschnitt der auf der Tragförderkette 12 transportierten stabförmigen Artikel 30 gezeigt. Tatsächlich ist üblicherweise die gesamte Tragförderkette 12 mehrlagig mit stabförmigen Artikeln 30 belegt. Es sind jedoch auch andere Ausführungsformen denkbar, bei denen einzelne stabförmige Artikel 30 beabstandet voneinander auf der Tragförderkette 12 transportiert werden. Die Tragförderkette 12 besteht aus einzelnen Tragförderkettengliedern 13. Diese weisen zur Aufnahme der zu transportierenden Artikel 30 eine ebene Oberfläche auf. Die Tragförderkettenglieder 13 bestehen vollständig aus elektrisch leitfähigem Kunststoffmaterial. Auf diese Weise wird die Entstehung elektrostatischer Aufladung durch Reibung der Tragförderkettenglieder 13 aneinander, der stabförmigen Artikeln 30 auf der Tragförderkette 12 oder der Tragförderkettenglieder 13 mit den Umlenkrollen stark reduziert. Die Tragförderkettenglieder 13 sind zur Bildung der Tragförderkette 12 gelenkig miteinander verbunden, und zwar derart, dass sie zum einen eine Schwenkbewegung der Tragförderkette 12 senkrecht zur Transport- bzw. Antriebsebene erlaubt, wodurch die Tragförderkette in der Lage ist, insbesondere Steigungen, wie im linken Bereich der Figur 1 gezeigt, zu überwinden. Zum anderen gewährleistet eine zweite Schwenkbewegung die Kurvengängigkeit der Tragförderkette 12 in der Transport- bzw. Antriebsebene, wie durch die S-Form der Förderkette in Fig. 1 veranschaulicht ist.

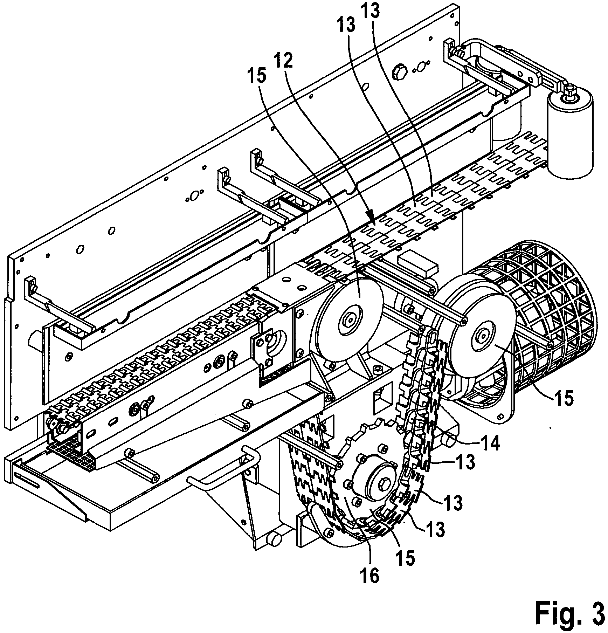

In den Figuren 2 und 3 ist eine Speichereinrichtung 11 (im Folgenden auch als Speicher bezeichnet) zum Fördern und Speichern stabförmiger Artikel, beispielsweise Zigaretten oder Filterstäbe, dargestellt. Der Speicher 11 umfasst eine endlos umlaufende Tragförderkette 12. Dabei weist die Tragförderkette 12 Transportstrecken, auf denen sie Artikel tragen kann, und Rückführstrecken, auf denen sie keine Artikel tragen kann, auf. Die Transportstrecken bilden die Transport- oder auch Antriebsebene, in der die Artikel eben (also horizontal) oder mit einer geringen Steigung transportiert werden können. Die Rückführstrecke kann auch scharfe Umlenkungen (z.B. 90°) aufweisen, da keine Artikel auf der Tragförderkette 12 liegen. Neben der Umlenkung bzw. Schwenkbewegung in einem Winkel, insbesondere senkrecht zur Transport- bzw. Antriebsebene ist eine Umlenkung bzw. Krümmung um eine senkrecht zur Transport- bzw. Antriebsebene verlaufende (imaginäre) Achse möglich. Diese Umlenkung bzw. Krümmung wird auch als Kurvengängigkeit bezeichnet. Die Förderkette 12 besteht aus einzelnen jeweils vollständig aus elektrisch leitfähigem Kunststoffmaterial gebildeten Tragförderkettengliedern 13. Die Tragförderkettenglieder 13 sind zur Bildung der Tragförderkette 12 gelenkig miteinander verbunden. Üblicherweise sind die Tragförderkettenglieder 13 über Kettenbolzen 14 miteinander verbunden. Andere Verbindungen der Tragförderkettenglieder 13, z.B. über Stifte, Haken oder andere geeignete Verbindungsmittel, sind ebenfalls möglich. Die Tragförderkette 12 selbst ist um mehrere Umlenkrollen 15 und mindestens ein Antriebsrad 16 geführt. Sowohl Umlenkrollen 15 wie auch Antriebsrad 16 bestehen aus elektrisch leitfähigem Kunststoff. Das Antriebsrad 16 ist ein Zahnrad mit einer bekannten Zähnezahl. Des Weiteren umfasst die Speichereinrichtung 11 eine Spannvorrichtung 17 für die Tragförderketten 12. Die Spannvorrichtung 17 weist Spannmittel 18 zum Aufbringen eine Spannkraft F in die Tragförderkette 12 auf. Wie weiter oben erwähnt, ist die Speichereinrichtung 11 nur beispielhaft erwähnt. Die vorliegende Erfindung kann auch bei einfachen Transporteinrichtungen, Speichermitteln oder Fördereinheiten mit einer endlos umlaufenden Tragförderkette 12 zur Anwendung kommen.

Die Tragförderkettenglieder 13 sind mittels der Kettenbolzen 14 gelenkig miteinander verbunden. Vorzugsweise sind die Kettenbolzen 14 aus Kunststoff oder Stahl, insbesondere aus elektrisch leitfähigem Kunststoff oder Stahl, hergestellt. Der Abstand A zweier Kettenbolzen 14 definiert die Teilung der Tragförderkette 12. Andere Referenzmarken, wie z.B. der Abstand der jeweils vorauslaufenden Kanten von Tragförderkettengliedern 13 oder die "Lücken" zwischen den Tragförderkettengliedern 13 können ebenfalls die Teilung der Tragförderkette 12 definieren.

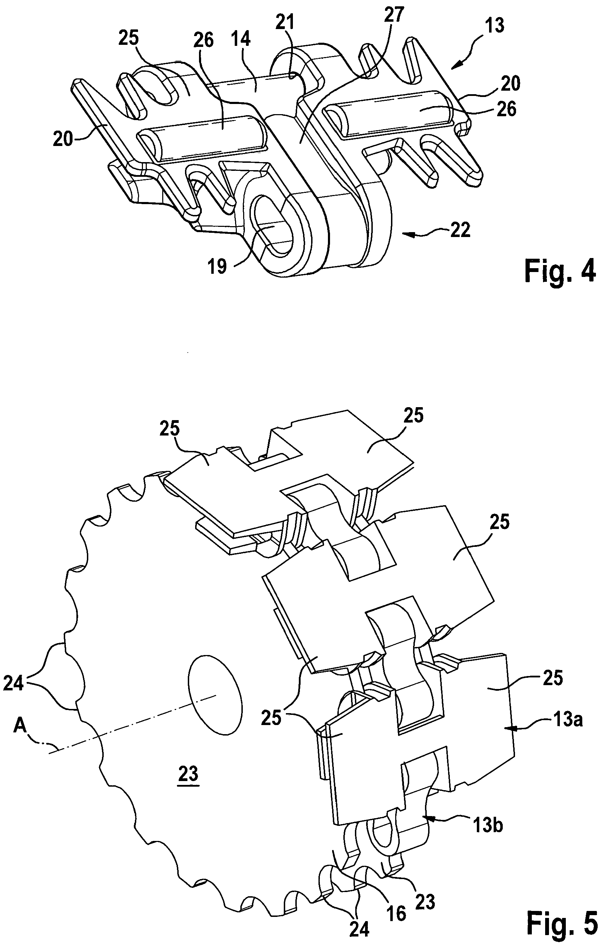

Figur 4 zeigt eine perspektivische Ansicht eine Ausführungsform eines Tragförderkettengliedes 13. Das Tragförderkettenglied 13 ist vollständig aus elektrisch leitfähigem Kunststoffmaterial gebildet. Das Tragförderkettenglied 13 umfasst Aufnahmen 21 zum Halten eines Gelenkbolzens 14 und ein Gelenkbolzenlager 19. Mittels des Gelenkbolzens 14 können mehrere Tragförderkettenglieder 13 zu einer Tragförderkette 12 für eine Maschine der Tabak verarbeitenden Industrie verbunden werden. An dem Grundkörper 22 des Tragförderkettenglieds 13 sind seitlich zwei plattenförmige Tragelemente 20 angesetzt. Eine parallel zur Gelenkebene orientierte Tragfläche 25 des Tragförderkettenglieds 13, die aus fluchtenden Oberflächen der Tragelemente 20 und des Grundkörpers 22 besteht, dient zum Tragen eines stabförmigen Tabakprodukts, insbesondere Zigaretten. Auf der Tragfläche 25 des Tragförderkettenglieds 13 sind längliche Mitnehmer 26 für das zu fördernde Tabak- oder Filterprodukt vorgesehen. Die Mitnehmer 26, zum Beispiel Materialerhebungen oder dergleichen, verlaufen vorzugsweise quer zur Transportrichtung und können durchgängig oder unterbrochen sein. Die Mitnehmer 26 dienen vorzugsweise zum Führen und Ausrichten der Artikel 30 sowie zum Halten der Artikel 30 auf den Tragflächen 25.

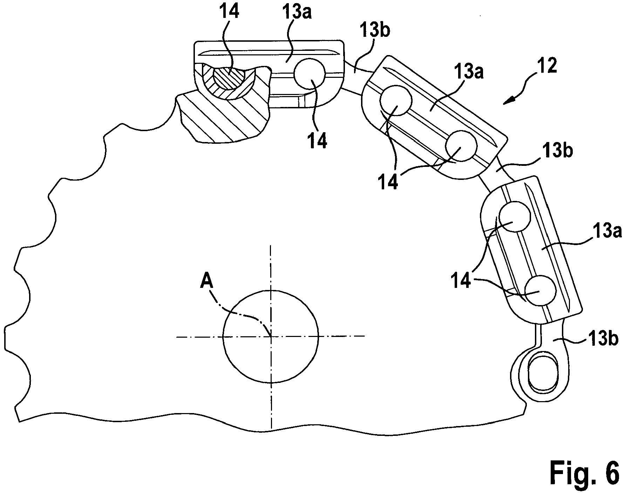

Figuren 5 und 6 zeigen eine erfindungsgemäße Transporteinheit mit einem Abschnitt einer Tragförderkette 12 auf einem Umlenk- und Antriebsrad 16. Die üblicherweise endlos ausgebildete Förderkette 12 ist aus mehreren Kettengliedern 13a, 13b gebildet, wobei jeweils ein Tragglied 13a und ein Zwischenglied 13b ein Kettenglied bilden. Jedes Tragglied 13a weist zwei Tragflächen 25 auf, die über einen Steg 27 miteinander verbunden sind. Die Tragflächen 25 können auch andere Formen als die darstellte aufweisen. Sie können zum Beispiel mit einer Art Verzahnung auf den in Transportrichtung gegenüberliegenden Seiten versehen sein, derart, dass benachbarte Tragflächen 25 ineinander greifen. Dadurch wird die Auflagefläche für zu transportierende Artikel vergrößert und Lücken zwischen den einzelnen Tragflächen 25 benachbarter Kettenglieder werden geschlossen. Im Bereich der Tragflächen 25 können auf deren den Artikeln zugewandten Seiten Mintnehmer ausgebildet sein. Die Mitnehmer, zum Beispiel Materialerhebungen oder dergleichen verlaufen vorzugsweise quer zur Transportrichtung und können durchgängig oder unterbrochen sein. Die Mitnehmer dienen vorzugsweise zum Führen und Ausrichten der Artikel 30 sowie zum Halten der Artikel 30 auf den Tragflächen 25.

Während bei dem in Figur 4 gezeigten Tragförderkettenglied 13 lediglich Tragförderkettenglieder 13 einer Art zu einer Tragförderkette 12 zusammengesetzt werden, liegen bei der in den Figuren 5 und 6 gezeigten Ausführungsform zwei verschiedene Arten von Kettengliedern 13a, 13b vor, die alternierend zu einer Tragförderkette 12 zusammengesetzt werden. Tragglieder 13a und Zwischenglieder 13b sind abwechselnd aneinander gereiht und beweglich miteinander verbunden. Hierzu sind die Zwischenglieder 13b im Bereich von Kettenbolzen 14, die an den Traggliedern 13a angeordnet sind, gelenkig an den Traggliedern 13a angeordnet. Hierbei sind insbesondere die Tragglieder 13a und vorzugsweise außerdem auch die Zwischenglieder 13b vollständig aus elektrisch leitfähigem Kunststoffmaterial gebildet. Die derart ausgebildete Tragförderkette 12 ist mittels eines oder mehrerer Antriebsräder 16, die vorzugsweise als sogenannte Doppelräder mit zwei Zahnscheiben 23 ausgebildet sind, kontinuierlich oder intermittierend antreibbar. Die Antriebsräder 16 sind dabei vorzugsweise aus elektrisch leitfähigem Kunststoffmaterial gebildet. Dabei greift das oder jedes Antriebsrad 16 mit Zähnen 24 oder dergleichen - ähnlich dem Fahrradkettenprinzip - zwischen die Tragglieder 13a. Die Achse A des oder jedes Antriebsrades 16 verläuft im Wesentlichen parallel zur Transport- bzw. Antriebsebene. Wie bereits erwähnt, ist die Förderkette 12 kurvengängig ausgebildet.

## Patentansprüche

1. Tragförderkettenglied (13), ausgebildet und eingerichtet für eine Tragförderkette (12) einer Maschine der Tabak verarbeitenden Industrie, wobei die Tragförderkette (12) mindestens zwei Schwenkbewegungen ausführen kann, von denen eine erste Schwenkbewegung die Bewegung der Tragförderkette (12) senkrecht zur Transportebene erlaubt und eine zweite Schwenkbewegung eine Bewegung die Kurvengängigkeit gewährleistet,
wobei das Tragförderkettenglied (13) aus einem Kunststoffmaterial besteht, **dadurch gekennzeichnet, dass** das Tragförderkettenglied (13) vollständig aus elektrisch leitfähigem Kunststoffmaterial gebildet ist.

2. Tragförderkettenglied (13) nach Anspruch 1, **dadurch gekennzeichnet, dass** es einstückig ausgebildet und im Spritzgussverfahren hergestellt ist.

3. Tragförderkettenglied (13) nach Anspruch 1 oder 2, **dadurch gekennzeichnet, dass** das elektrisch leitfähige Kunststoffmaterial mindestens ein Material, ausgewählt aus der Gruppe, bestehend aus mindestens ein intrinsisch leitfähiges Polymer enthaltenden Polymeren und mindestens ein elektrisch leitfähiges Additiv enthaltenden Polymeren, ist.

4. Tragförderkettenglied (13) nach Anspruch 3, **dadurch gekennzeichnet, dass** das Kunststoffmaterial aus einer Mischung von mindestens ein intrinsisch leitfähiges Polymer enthaltendem Polymer und mindestens ein elektrisch leitfähiges Additiv enthaltendem Polymer besteht, wobei die Polymere zur selben Familie gehören.

5. Tragförderkettenglied (13) nach Anspruch 3 oder 4, **dadurch gekennzeichnet, dass** das mindestens eine elektrisch leitfähige Additiv ein anorganisches Additiv, insbesondere ausgewählt aus der Gruppe bestehend aus Kohlenstofffasern, Edelstahlfasern, Kupfer, Aluminium, Leitfähigkeitsruß und Graphit, ist, wobei Kohlenstofffasern besonders bevorzugt sind.

6. Tragförderkettenglied (13) nach einem der Ansprüche 3 bis 5, **dadurch gekennzeichnet, dass** das elektrisch leitfähige Kunststoffmaterial aus einem ein intrinsisch leitfähiges Polymer enthaltenden Polymer und einem mindestens ein elektrisch leitfähiges Additiv enthaltenden Polymer besteht, wobei als Additiv Kohlenstofffasern oder Edelstahlfasern oder eine Mischung der beiden verwendet wird.

7. Tragförderkettenglied (13) nach Anspruch 5 oder 6, **dadurch gekennzeichnet, dass** der Gewichtsanteil der Edelstahlfasern oder der Kohlenstofffasern von 1 bis 6 Gew.-%, vorzugsweise von 2 bis 4 Gew.-%, beträgt, wobei der Gesamtgehalt an anorganischem Additiv von 1 bis 9 Gew.-%, vorzugsweise von 2 bis 8 Gew.-%, beträgt und wobei der Gewichtsanteil jeweils auf das gesamte elektrisch leitfähige Kunststoffmaterial bezogen ist.

8. Tragförderkettenglied (13) nach einem der Ansprüche 5 bis 7, **dadurch gekennzeichnet, dass** die Edelstahlfasern oder die Kohlenstofffasern eine Länge von 0,02 bis 20 mm, vorzugsweise von 0,02 bis 2 mm, insbesondere von 0,02 bis 0,2 mm aufweisen.

9. Tragförderkettenglied (13) nach einem der Ansprüche 1 bis 8, **dadurch gekennzeichnet, dass** das Kunststoffmaterial pyrolysekonform ist.

10. Tragförderkette (12) für eine Maschine der Tabak verarbeitenden Industrie, wobei die Tragförderkette (12) axial und radial kurvengängig ist, bestehend aus Tragförderkettengliedern (13) nach einem der Ansprüche 1 bis 9.

11. Tragförderkette (12) nach Anspruch 10, **dadurch gekennzeichnet, dass** die Betriebslast für die Zugfestigkeit der Kette 1.500 N, insbesondere 1.800 N und besonders bevorzugt 2.000 N beträgt.

12. Tragförderkette (12) nach Anspruch 10 oder 11, **dadurch gekennzeichnet, dass** der horizontale Kurvenradius 400 bis 800 mm beträgt.

13. Tragförderkette (12) nach einem der Ansprüche 10 bis 12, **dadurch gekennzeichnet, dass** der kleinste vertikale Umlenkradius 55 mm, vorzugsweise 45 mm, beträgt.

14. Anordnung für den Transport von stabförmigen Artikeln (30) der Tabak verarbeitenden Industrie aus einer Tragförderkette (12) und mindestens zwei Umlenkrollen (15), von denen mindestens eine als Antriebsrad (16) ausgebildet ist, **dadurch gekennzeichnet, dass** die Tragförderkette (12) eine Tragförderkette (12) nach einem der Ansprüche 10 bis 13 ist und dass die Umlenkrollen (15) vollständig aus einem elektrisch leitfähigen Kunststoffmaterial gebildet sind.

15. Transfer- und/oder Speichersystem für stabförmige Artikel (30) der Tabak verarbeitenden Industrie, umfassend einen Kettenförderer für stabförmige Artikel (30), umfassend eine endlos umlaufende Tragförderkette (12) sowie mindestens zwei Umlenkrollen (15), von denen mindestens eine als Antriebsrad (16) ausbildet ist und um die die Kette (12) geführt ist, **dadurch gekennzeichnet, dass** die Kette eine Tragförderkette (12) nach einem der Ansprüche 10 bis 13 ist.
